# EUROPÄISCHE PATENTSCHRIFT

(11) **EP 4 001 724 B1**
(45) Veröffentlichungstag und Bekanntmachung des Hinweises auf die Patenterteilung: **29.05.2024**
(21) Anmeldenummer: 20209557.6
(22) Anmeldetag: 24.11.2020
(51) Int. Cl.: F16L 37/088

(54) **VERBINDUNGSEINRICHTUNG FÜR MEDIENFÜHRENDE BAUTEILE**
CONNECTING DEVICE FOR MEDIA-CARRYING COMPONENTS
DISPOSITIF DE RACCORDEMENT POUR COMPOSANTS GUIDANT DES MILIEUX

(43) Veröffentlichungstag der Anmeldung: 25.05.2022
(73) Patentinhaber: R. Nussbaum AG, 4600 Olten 1 (CH)
(72) Erfinder: MEINL, Markus, 5600 Lenzburg (CH); HÜBSCHER, Michel, 4800 Zofingen (CH)
(74) Vertreter: Keller Schneider Patent- und Markenanwälte AG

(56) Entgegenhaltungen:
- FR-A1- 2 299 588
- US-A- 4 105 226
- US-A1- 2004 090 066
- US-A1- 2008 012 326
- US-B2- 8 746 750

## Beschreibung

### Technisches Gebiet

Die Erfindung betrifft eine Verbindungseinrichtung für medienführende Bauteile, umfassend ein erstes medienführendes Bauteil mit einem Endabschnitt mit einem Aussengewinde und einem zylindrischen Innenmantel und ein zweites medienführendes Bauteil mit einem endseitigen Anschlussabschnitt zum Verbinden mit dem ersten medienführenden Bauteil. Die Erfindung betrifft weiter eine Anschlussvorrichtung zur Verbindung mit einem ersten medienführenden Bauteil und ein Verfahren zum Lösen von Elementen der Anschlussvorrichtung.

### Stand der Technik

Medienführende Bauteile, z. B. von Leitungen für die Frischwasserversorgung in Gebäuden, können auf unterschiedliche Weise miteinander verbunden werden. So sind Schraubverbindungen bekannt, bei welchen ein zweites medienführendes Bauteil (Fitting, Armatur, Rohr usw.) mit einem Innengewinde auf ein erstes medienführendes Bauteil (Fitting, Armatur, Rohr usw.) mit einem Aussengewinde aufgeschraubt wird. Die Abdichtung erfolgt in diesen Fällen oft mit Hilfe von Hanf, mit dem das Aussengewinde vor dem Verschrauben umwickelt wird. Alternativen zum Hanf sind Dichtbänder oder Flüssigl<unststoffe. Wenn Schraubverbindungen korrekt hergestellt werden, sind sie dauerhaft dicht und halten hohe Drücke aus. Allerdings besteht das Risiko einer nicht vollständig korrekten Herstellung der Verbindung, so ist die Dichtigkeit nicht gewährleistet, wenn die Schraubverbindung nicht ausreichend festgezogen wird, wenn zu viel Hanf verwendet wird oder wenn dieser beim Verschrauben vom Bauteil mit dem Innengewinde vor sich her geschoben wird. Hanf in Verbindungen für Trinkwasser birgt auch Probleme für die Trinl<wasserhygiene, weil Hanf einen Nährboden für Bakterien bilden kann. Zudem werden zur Herstellung der Schraubverbindung Werkzeuge wie z. B. Schrauben- oder Gabelschlüssel benutzt, die einen gewissen Einsatzraum benötigen. Bei engen Stellen kann dies problematisch sein.

Dagegen ist bei Schraubverbindungen vorteilhaft, dass sie bei einer Undichtigkeit, z. B. aufgrund einer unbeabsichtigten Verletzung des Leitungsstrangs durch andere Fachkräfte oder wegen unsachgemässer Verlegung oder Montage des Strangs, leicht ausgetauscht werden können.

Eine Alternative zu Schraubverbindungen sind Steckverbindungen, bei denen ein zweites medienführendes Bauteil durch eine im Wesentlichen axiale Steckbewegung in ein erstes medienführendes Bauteil eingesteckt wird. Mit Hilfe eines am ersten oder zweiten Bauteil angeordneten federnden Elements schnappt im Rahmen des Steckvorgangs ein Anschlussabschnitt des zweiten medienführenden Elements in einem entsprechenden Abschnitt des ersten federnden Elements ein, wonach die Verbindung (durch ein geeignetes Dichtelement) abgedichtet und axial gesichert ist.

Steckverbindungen lassen sich somit einfach herstellen. Allerdings sind sie in der Regel nicht zerstörungsfrei lösbar. Bei einem Ersatz der Verbindung ergibt sich ein entsprechend hoher Aufwand.

Die US 2004/090066 A1 (M. Hoffmann) zeigt einen Steckverbinder für fluidische Systeme, insbesondere für CO2 und Treibstoffe; diese umfassen ein Gehäuse und einen darin aufnehmbaren Steckteil, eine Dichtung zur Abdichtung der Fluidverbindung und eine Sperreinrichtung mit einem Sperrelement am Steckteil und einer Sperrschulter am Gehäuse. Das Gehäuse weist eine zweiteilige Form auf mit einem inneren Gehäuseteil und einem äusseren Gehäuseteil, der lösbar am inneren Gehäuseteil angebracht werden kann. Die Sperrschulter ist am Ende des Eingangsbereichs des äusseren Gehäuseteils ausgebildet. Die Steckverbindung kann wieder gelöst werden, indem die Verbindung zwischen dem äusseren Gehäuseteil und dem inneren Gehäuseteil gelöst wird, z. B. durch Lösen einer Schraubverbindung; dies ist ohne ein Verdrehen des inneren Gehäuseteils und des Steckteils möglich. Beim Sperrelement zwischen dem Steckteil und dem Gehäuse handelt es sich beim dargestellten Ausführungsbeispiel um zwei Sprengringe, die in einer umlaufenden Rille des Steckteils gehalten sind. Zum Lösen des äusseren Gehäuseteils vom Steckteil wird eine Hülse statt des inneren Gehäuseteils eingeschraubt; diese weist ein konisches Ende auf und drückt so die Sprengringe nach innen.

Die US 2008/012326 A1 (OSO Hotwater AS) betrifft eine Verbindung für einen Boiler oder anderen Drucktank. Sie umfasst einen Adapter, der permanent am Tank angeordnet ist, und ein Fitting zum Zusammenwirken mit dem Adapter. Eine Mutter ist auf den Adapter aufgeschraubt. Ein rohrartiger Teil des Fittings wird in den Adapter eingeschoben und umfasst eine Nut zum Zusammenwirken mit einem Sprengring. Die Verbindung lässt sich durch Einschieben des Fittings in den mit der Mutter versehenen Adapter im Sinn einer Steckverbindung herstellen. Der Sprengring kommt dabei hinter einer Schulter der Mutter zu liegen. Die Verbindung kann durch Lösen der Mutter gelöst werden, wobei der Sprengring in der Nut des Fittings verbleibt; bei Bedarf kann er dann daraus entfernt werden.

### Darstellung der Erfindung

Aufgabe der Erfindung ist es, eine dem eingangs genannten technischen Gebiet zugehörende Anschlussvorrichtung und Verbindungseinrichtung für eine Verbindung zu schaffen, welche einfach und sicher herstellbar und wieder zerstörungsfrei lösbar ist.

Die Lösung der Aufgabe ist durch die Merkmale des Anspruchs 1 definiert.

Die Anschlussvorrichtung zur Verbindung mit einem ersten medienführenden Bauteil umfasst ein zweites medienführendes Bauteil mit einem endseitigen Anschlussabschnitt, wobei der Anschlussabschnitt folgendes umfasst:
- einen Dichtabschnitt mit einem zylindrischen Aussenmantel und einem Dichtelement zur dichtenden Verbindung mit dem Endabschnitt des ersten medienführenden Bauteils, wenn der Dichtabschnitt in den Endabschnitt des ersten medienführenden Bauteils eingeschoben ist; und
- einen proximal zum Dichtabschnitt angeordneten Sicherungsabschnitt, wobei am Sicherungsabschnitt ein elastisches Element angeordnet ist.

Die Anschlussvorrichtung umfasst weiter ein Sicherungsstück mit einem Innengewinde zum Aufschrauben auf das Aussengewinde des ersten medienführenden Bauteils. Das Sicherungsstück und das zweite medienführende Bauteil sind derart ausgebildet, dass das zweite medienführende Bauteil durch einen Steckvorgang dichtend mit dem ersten medienführenden Bauteil mit aufgeschraubtem Sicherungsstück verbindbar ist, wobei die Verbindung durch das elastische Element gesichert ist.

Die erfindungsgemässe Verbindungseinrichtung umfasst eine erfindungsgemässe Anschlussvorrichtung und ein erstes medienführendes Bauteil mit einem Endabschnitt mit Aussengewinde und einem zylindrischen Innenmantel.

Erste medienführende Bauteile mit einem Endabschnitt mit Aussengewinde und einem zylindrischen Innenmantel sind seit längerer Zeit bekannt, im Markt erhältlich und vielfach verbaut. An diese Bauteile werden herkömmliche zweite medienführende Bauteile mittels Schraubverbindung angeschlossen. Eine erfindungsgemässe Anschlussvorrichtung lässt sich nun u. a. im Zusammenhang mit solchen bestehenden bzw. im Markt bereits verfügbaren ersten medienführenden Bauteilen einsetzen.

Zur Herstellung der Verbindung wird nun zunächst das Sicherungsstück auf das Aussengewinde des ersten medienführenden Bauteils aufgeschraubt. Anschliessend kann die Verbindung durch einen Steckvorgang hergestellt werden.

Im Folgenden verweist "distal" auf eine Anordnung in Richtung des freien Endes eines Bauteils, "proximal" dagegen auf eine Anordnung in der entgegengesetzten Richtung. Vorliegend ist der Sicherungsabschnitt also beispielsweise ausgehend vom freien Ende des zweiten medienführenden Bauteils hinter dem Dichtabschnitt angeordnet, die Reihenfolge ist also freies Ende - Dichtabschnitt - Sicherungsabschnitt.

Beim Steckvorgang findet ein Einschnappen, Einklicken bzw. Einrasten statt, wobei sich das elastische Element (ganz oder teilweise) sprungartig entspannt, um von einer ersten Konfiguration in eine zweite Konfiguration überzugehen. Die zweite Konfiguration ist dabei derart, dass die Verbindung durch das elastische Element axial gesichert ist. Die Sicherung erfolgt zwischen dem zweiten medienführenden Bauteil und dem auf das erste medienführende Bauteil aufgeschraubten Sicherungsstück.

Die erfindungsgemässe Verbindungseinrichtung lässt sich durch den (axialen) Steckvorgang schnell und einfach herstellen. Dazu ist nicht einmal direkte Sicht auf die Verbindungsstelle notwendig. Durch Lösen der Verschraubung zwischen dem Sicherungsstück und dem ersten medienführenden Bauteil lässt sie sich aber auf einfache Weise und zerstörungsfrei wieder lösen, wobei nicht einmal ein Verdrehen eines der medienführenden Bauteile notwendig ist.

Die Elemente für die axiale Sicherung einerseits und für die Abdichtung gegenüber dem geführten Medium sind funktional klar getrennt und können im Hinblick auf ihre Funktion optimiert werden.

Weil die Abdichtung nicht im Bereich des Gewindes stattfindet, sondern zwischen dem Dichtabschnitt des zweiten medienführenden Bauteils und dem Innenmantel des ersten medienführenden Bauteils, ist kein Hanfen notwendig. Die oben erwähnten Probleme werden deshalb vermieden.

Die erfindungsgemässe Verbindungseinrichtung ist grundsätzlich für verschiedene medienführende Bauteile, z. B. für Wasser, andere Flüssigkeiten oder Gase, geeignet. Besonders geeignet ist sie für die Frischwasserversorgung, insbesondere die Etageninstallation. Beispielsweise kann eine solche Verbindungseinrichtung zwischen einem Etagenverteiler und den abgehenden Leitungen eingesetzt werden. Beim ersten medienführenden Bauteil und beim zweiten medienführenden Bauteil kann es sich z. B. um Verteileranschlüsse, Fittings oder Rohrenden handeln.

Die Verbindungseinrichtung lässt sich ohne weiteres mit unterschiedlichen Dimensionen fertigen. Sie kann beispielsweise an die Nennweite einer Verteilerleitung (z. B. DN 10/15/20) angepasst sein.

Die Steckverbindung kann durch geeignete Auslegung des elastischen Elements und der damit zusammenwirkenden Abschnitte, namentlich des Sicherungsstücl<s und des zweiten medienführenden Bauteils, so umgesetzt werden, dass beim Einschnappen, Einklicken bzw. Einrasten ein gut hörbares Geräusch erzeugt wird, das dem Monteur als Signal für die Herstellung der dichtenden Verbindung und der axialen Sicherung dient.

Die Elemente, zwischen denen die Steckverbindung hergestellt wird, können im Rahmen der erfindungsgemässen Verbindungseinrichtung im Wesentlichen rotationssymmetrisch ausgebildet werden, so dass auch nach Herstellung der Steckverbindung das zweite medienführende Bauteil noch um seine Längsachse relativ zum ersten medienführenden Bauteil verdreht werden kann, ohne dass die Verbindung gelöst oder undicht wird.

Die Verbindungseinrichtung kann aus unterschiedlichen Materialien hergestellt werden, z. B. aus Rotguss, Messing, Edelstahl oder der in der EP 2 014 964 B1 (R. Nussbaum AG) angegebenen Legierung.

Auch die Herstellung aus Kunststoffen oder Verbundmaterialien ist möglich. Die einzelnen Elemente der Verbindung, also das erste medienführende Bauteil, das zweite medienführende Bauteil und das Sicherungsstück, können aus demselben oder aus unterschiedlichen Materialien gefertigt sein.

Der Sicherungsabschnitt des zweiten medienführenden Bauteils umfasst eine Aufnahmenut und als elastisches Element einen in der Aufnahmenut angeordneten Sprengring. Als Sprengring wird ein aus einem elastischen Material, z. B. Federstahl, gebogener, offener, im Wesentlichen kreisrunder Ring verstanden.

Der Sprengring wird beim Einstecken (Einschieben) des Anschlussabschnitts des zweiten medienführenden Bauteils durch radiale Kräfte komprimiert, beim Einschnappen, Einklicken bzw. Einrasten entspannt er sich (zumindest teilweise) sprungartig, um das zweite medienführende Bauteil axial am ersten medienführenden Bauteil zu sichern.

Weiterhin weist das Sicherungsstück einen zulaufenden Einlauf für den Sicherungsabschnitt des zweiten medienführenden Bauteils und eine Aufnahmenut für den Sprengring des zweiten medienführenden Bauteils in seiner eingeschobenen Stellung auf. Der zulaufende Einlauf ermöglicht eine allmähliche Kompression des Sprengrings, so dass die Einschubl<räfte im Rahmen bleiben. Die (innenseitige) Aufnahmenut des Sicherungsstücl<s wirkt im eingeschobenen Zustand des zweiten medienführenden Bauteils mit dessen (aussenseitiger) Aufnahmenut zusammen, um den wieder (ganz oder teilweise) entspannten Sprengring aufzunehmen. In dieser Stellung sichert der Sprengring die Verbindung axial, weil er eine axiale Bewegung des zweiten medienführenden Bauteils zum Sicherungsstück (und damit zu dem damit verschraubten ersten medienführenden Bauteil) verhindert.

Mit Vorteil schliesst die Aufnahmenut des Sicherungsstücl<s unmittelbar an den zulaufenden Einlauf an. Daraus ergibt sich ein definierter Einrastvorgang, und das axiale Spiel wird minimiert. Die Verbindungseinrichtung lässt sich zudem in axialer Richtung kompakt ausführen.

Der zulaufende Einlauf des Sicherungsstücl<s weist in einem ersten, von der Aufnahmenut abgewandten Abschnitt einen ersten Verjüngungswert auf und in einem zweiten, der Aufnahmenut zugewandten Abschnitt weist er einen zweiten Verjüngungswert auf, wobei der zweite Verjüngungswert grösser ist als der erste Verjüngungswert.

Der Verjüngungswert bezeichnet den Wert der I<egelverjüngung, definiert als Verhältnis zwischen Durchmesserdifferenz und axialem Abstand. Ein hoher Wert entspricht bei einem zulaufenden Abschnitt somit einer schnelleren Abnahme des Innendurchmessers als ein tiefer Wert. Die erwähnte Geometrie führt dazu, dass beim Einschieben der Sprengring zunächst vorzentriert wird, wobei nur geringe radiale Kräfte auf ihn einwirken. Dadurch wird vermieden, dass der Sprengring zwischen dem Sicherungsstück und dem zweiten medienführenden Bauteil eingeklemmt wird, was ein weiteres Einschieben verunmöglichen würde. Sobald die Vorzentrierung stattgefunden hat, wirken aufgrund des höheren Verjüngungswerts im zweiten Abschnitt höhere radiale Kräfte auf den Sprengring ein und I<omprimieren diesen.

Der erste Abschnitt und der zweite Abschnitt können unmittelbar aneinander anschliessen oder durch einen Zwischenabschnitt beabstandet sein. Der erste Abschnitt muss nicht unmittelbar an das einlaufseitige freie Ende des Sicherungsstücl<s anschliessen, der zweite Abschnitt muss nicht unmittelbar an die Aufnahmenut des Sicherungsstücl<s angrenzen.

Mit Vorteil bilden die Aufnahmenut des zweiten medienführenden Bauteils und die Aufnahmenut des Sicherungsstücl<s im verbundenen Zustand der Verbindungseinrichtung gemeinsam eine umlaufende Aufnahme mit einem symmetrisch ovalen Querschnitt. Ein solcher Querschnitt kann den Sprengring in axialer Richtung passend aufnehmen, während in radialer Richtung ein Spielraum vorhanden ist, insbesondere für den (teilweisen) Übergang aus der Aufnahmenut des zweiten medienführenden Bauteils in die Aufnahmenut des Sicherungsstücl<s bei der Entspannung des Sprengrings nach erfolgtem vollständigen Einschieben des zweiten medienführenden Bauteils. Der Gesamtquerschnitt wird insbesondere durch einen mittleren Abschnitt mit konstanter Breite und abgerundete Endabschnitte gebildet, wobei sowohl im zweiten medienführenden Bauteil als auch im Sicherungsstück jeweils einer der abgerundeten Abschnitte und ein Teil des mittleren Abschnitts ausgebildet sind. Die axiale Ausdehnung (Breite) der gebildeten umlaufenden Aufnahme entspricht bevorzugt im Wesentlichen dem Querschnittsdurchmesser des Sprengrings zuzüglich einer sinnvollen Toleranz, um ein Verklemmen des Sprengrings bei minimalem axialen Spiel zu verhindern. Die Breite des mittleren Abschnitts beträgt beispielsweise das 1.05-1.3-fache des Nenndurchmessers des Sprengringprofils.

Die Geometrie der miteinander zusammenwirkenden Elemente des Sicherungsabschnitts des zweiten medienführenden Bauteils und des Sicherungsstücl<s ist somit insbesondere so beschaffen, dass die Steckverbindung mit moderaten Kräften und dennoch relativ kurzem Einschubweg sicher hergestellt werden kann, wobei das Profil des Einlaufs des Sicherungsstücl<s so ausgebildet ist, dass das zweite medienführende Bauteil bei fehlender Einschiebel<raft aufgrund der Rückstellkräfte des Sprengrings aus dem Sicherungsstück herausgedrückt wird. Solange die Verbindung nicht endgültig hergestellt ist, also abdichtend und gesichert, lösen sich die beiden Elemente somit automatisch wieder voneinander, sobald die axiale Kraft fehlt. Dadurch wird vermieden, dass Verbindungen geschaffen werden können, die nur scheinbar abgedichtet und/oder gesichert sind.

Mit Vorteil sind die freien Enden des Sprengrings radial nach innen umgebogen. Die Endbereiche des Sprengrings können somit die Nut auch in extremen Endlagen des Sprengrings, wie sie z. B. beim Verkanten des zweiten medienführenden Bauteils gegenüber dem Sicherungsstück auftreten können, nicht verlassen. Entsprechend kann die einmal geschaffene Steckverbindung auch nicht durch Einwirkung von äusseren Kräften auf die beteiligten Elemente gelöst werden. Aufgrund der weitgehend rotationssymmetrischen Ausgestaltung der beteiligten Elemente führt auch eine Verdrehung um die Längsachse nicht zu Einflüssen, die ein Lösen der Steckverbindung begünstigen könnten. Zudem verringern die nach innen umgebogenen Enden die Bewegungsmöglichkeiten des Sprengrings in einer Aufnahmenut. Entsprechend ist die Positionierung des Sprengrings in der Nut stärker bestimmt als ohne umgebogene Enden. Dies kann beim Zusammenwirken des Sprengrings mit weiteren Elementen, insbesondere beim Erfassen des mit dem Sprengring versehenen zweiten medienführenden Bauteils, vorteilhaft sein.

Je nach Geometrie der Aufnahmenuten und der sonstigen mit dem Sprengring zusammenwirkenden Elemente kann allenfalls auf nach innen umgebogene Enden verzichtet werden. Daraus ergeben sich allerdings Einschränkungen der Formgebung, die wiederum zu einem reduzierten Bedienkomfort führen können.

Mit Vorteil weist der Dichtabschnitt des zweiten medienführenden Bauteils eine umlaufende Nut auf, und das Dichtelement ist durch ein in der Nut eingelegtes umlaufendes Dichtungselement, insbesondere durch einen O-Ring, gebildet. Die Dichtung erfolgt somit radial an einem Zylinder. Dadurch lässt sich das Dichtungselement so anordnen, dass es in keinem Moment den Sprengringbereich kontaktiert - entsprechend werden mögliche Beschädigungen bei der Montage vermieden.

Während die Steckverbindung unlösbar ist, lässt sich die erfindungsgemässe Verbindungseinrichtung wie oben erwähnt lösen, indem die Verschraubung des Sicherungsstücl<s mit dem ersten medienführenden Bauteil gelöst wird. Bei einer geeigneten Aussenkontur des Sicherungsstücl<s ist dies mittels gängiger Werkzeuge, z. B. Gabel- oder Schraubschlüssel möglich. Dadurch wird die Kombination von zweitem medienführenden Bauteil und Sicherungsstück vom ersten medienführenden Bauteil gelöst. Das Sicherungsstück ist also über das elastische Element weiterhin am zweiten medienführenden Bauteil gehalten.

Mithilft eines Spezialwerkzeugs lässt sich nun auch das Sicherungsstück wieder vom zweiten medienführenden Bauteil lösen. Dies erfolgt durch Einschrauben eines Lösewerkzeugs mit einem Aussengewinde und einem distal dazu angeordneten umlaufenden axialen Steg mit konisch zulaufender Stirn, wobei das Aussengewinde mit dem Innengewinde des Sicherungsstücl<s zusammenwirkt, wobei das am Sicherungsabschnitt des zweiten medienführenden Bauteils angeordnete elastische Element aufgrund der konisch zulaufenden Stirn radial komprimiert wird, bis die Sicherung der Verbindung durch das elastische Element gelöst ist.

Das Lösewerkzeug umfasst einen rohrförmigen Werkzeugkörper mit dem Aussengewinde und dem distal daran angeordneten umlaufenden axialen Steg mit konisch zulaufender Stirn. Das Aussengewinde ist dabei so ausgebildet, dass es mit dem Innengewinde des Sicherungsstücks zusammenwirken kann. Beim Einschrauben in das Sicherungsstück kontaktiert die konisch zulaufende Stirn das elastische Element und drückt dieses radial nach innen. Auf diese Weise wird die Fixierung des zweiten medienführenden Bauteils gelöst und dieses kann schliesslich zusammen mit dem elastischen Element (dem Sprengring) axial vom Sicherungsstück gelöst werden. Das Sicherungsstück kann nun noch vom Aussengewinde des Spezialwerkzeugs abgeschraubt werden. So sind alle Elemente der erfindungsgemässen Verbindungseinrichtung nochmals nutzbar, sofern dies die Natur des zweiten medienführenden Bauteils zulässt. Das Verbinden und Trennen kann grundsätzlich mehrfach erfolgen, ohne dass Schäden an den einzelnen Bauteilen zu erwarten sind.

Soll erneut eine Verbindung geschaffen werden, wird das Sicherungsstück wieder auf ein Aussengewinde eines ersten medienführenden Bauteils aufgeschraubt, was mit einem handelsüblichen Gabel- oder Schraubenschlüssel erfolgen kann. Dieser Vorgang ist nicht kritisch, weil die Schraubverbindung nur der Fixierung dient und keine abdichtende Funktion hat. Anschliessend kann die Steckverbindung durch Einschieben des zweiten medienführenden Bauteils erneut geschaffen werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine Explosionszeichnung einer erfindungsgemässen Verbindungseinrichtung;
- Fig. 2a: einen Längsschnitt durch die Verbindungseinrichtung zu Beginn des Einschiebens des zweiten medienführenden Bauteils und im verbundenen Zustand;
- Fig. 2b: einen Detailausschnitt aus der Figur 2a;
- Fig. 3: einen Querschnitt durch die Verbindungseinrichtung im verbundenen Zustand;
- Fig. 4a: einen Längsschnitt durch das zweite medienführende Bauteil und das Sicherungsstück zu Beginn des Lösevorgangs und nach dem Komprimieren des Sprengrings; und
- Fig. 4b, c: Detailausschnitte aus der Figur 4a.

Grundsätzlich sind in den Figuren gleiche Teile mit gleichen Bezugszeichen versehen.

### Wege zur Ausführung der Erfindung

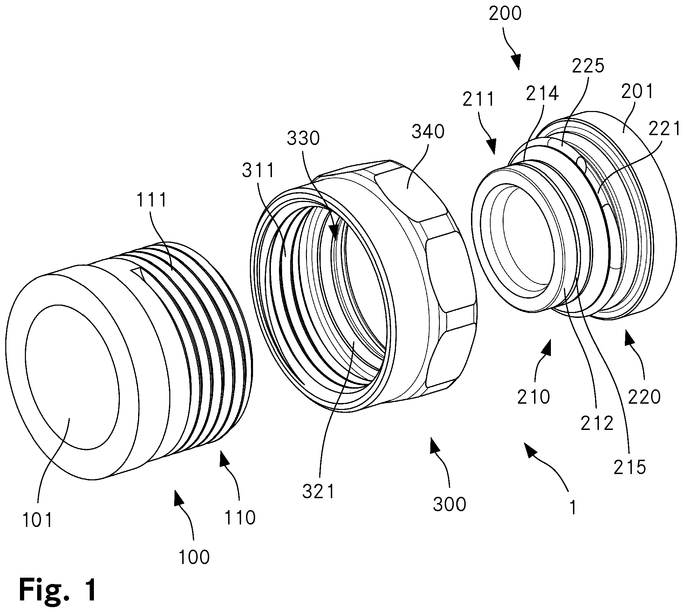

Die Figur 1 zeigt eine Explosionszeichnung einer erfindungsgemässen Verbindungseinrichtung. Die Verbindungseinrichtung 1 umfasst ein erstes medienführendes Bauteil 100, z. B. ein Verteilergehäuse mit mehreren Abgängen, von dem hier nur der Endabschnitt 110 dargestellt ist. Die Verbindungseinrichtung 1 umfasst weiter ein zweites medienführendes Bauteil 200 und ein Sicherungsstück 300.

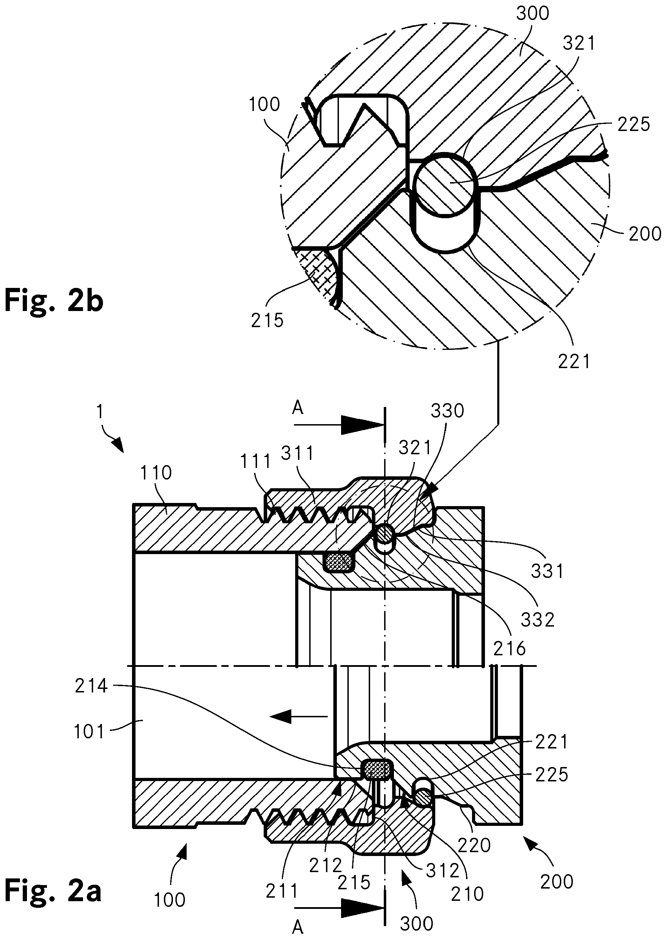

Im Endabschnitt 110 des ersten medienführenden Bauteils 100 ist in an sich bekannter Art ein Aussengewinde 111 ausgebildet. Das Sicherungsstück 300 ist hülsenartig ausgebildet und umfasst ein Innengewinde 311, das auf das Aussengewinde 111 des ersten medienführenden Bauteils 100 aufgeschraubt werden kann und das sich über gut die Hälfte der axialen Ausdehnung des Sicherungsstücks 300 erstreckt. Das Sicherungsstück 300 weist hinter dem Innengewinde 311 eine Aufnahmenut 321 auf, dahinter wiederum einen Einlauf 330. Dieser ist weiter unten, im Zusammenhang mit der Figur 2, näher beschrieben. Am Aussenmantel des Sicherungsstücks 300 ist zudem eine sechseckige Kontur 340 ausgebildet.

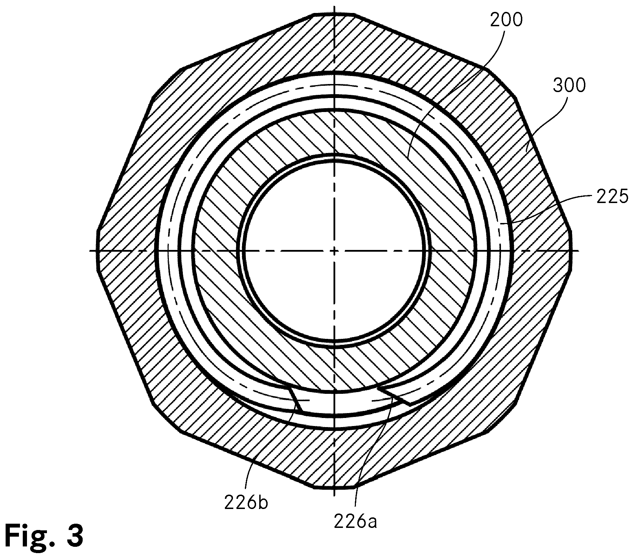

Vom zweiten medienführenden Bauteil 200 ist nur das vordere Ende dargestellt, welches am freien Ende des Bauteill<örpers 201 ausgebildet ist. An diesen Bauteilkörper 201 schliesst sich ein Anschlussabschnitt 210 zur Verbindung mit dem ersten medienführenden Bauteil 100 und dem Sicherungsstück 300 an. Im Anschlussabschnitt 210 ist, angrenzend an den Bauteilkörper 201, ein Sicherungsabschnitt 220 ausgebildet (siehe unten, Figur 2). Dieser schliesst eine Aufnahmenut 221 ein. In diesem ist ein Sprengring 225 aus Federstahl aufgenommen (vgl. Figur 3). Distal vor der Aufnahmenut 221 ist am Anschlussabschnitt 210 ein Dichtabschnitt 211 ausgebildet. Dieser weist einen zylindrischen Aussenmantel 212 auf, in dem eine umlaufende Aufnahmenut 214 ausgespart ist. In dieser ist ein gefetteter O-Ring 215 als Dichtelement aufgenommen. Der zylindrische Aussenmantel 212 ist passend zur Aufnahme in der Bohrung 101 des Endabschnitts 110 des ersten medienführenden Bauteils 100 dimensioniert, so dass im aufgenommenen Zustand der O-Ring 215 gegenüber der Mantelfläche der Bohrung 101 abdichtet.

Die Figur 2a zeigt einen Längsschnitt durch die Verbindungseinrichtung 1 zu Beginn des Einschiebens des zweiten medienführenden Bauteils (unten) und im verbundenen Zustand (oben). Die Figur 2b zeigt den mit einem Kreis markierten Detailausschnitt aus der Figur 2a. Zunächst ist das Sicherungsstück 300 mit seinem Innengewinde 311 auf das Aussengewinde 111 im Endabschnitt 110 des ersten medienführenden Bauteils 100 aufgeschraubt. Das Sicherungsstück 300 kontaktiert dabei mit einem Innenabsatz 312 das stirnseitige Ende des Endabschnitts 110. Das erste medienführende Bauteil 100 mit aufgeschraubtem Sicherungsstück 300 ist so für die Herstellung einer Steckverbindung vorbereitet.

Das zweite medienführende Bauteil 200 mit in seiner Aufnahmenut 221 eingesetztem Sprengring 225 wird nun mit seinem Anschlussabschnitt 210 in die Bohrung 101 des ersten medienführenden Bauteils 100 eingeführt. Der Aussenmantel 212 des vorne liegenden Dichtabschnitts 211 kommt in Kontakt mit dem Innenmantel der zylindrischen Bohrung 101 und gleitet auf diesem passend vorwärts. Weil der O-Ring 215 gefettet ist, lässt er sich axial verschieben und zusammen mit dem zweiten medienführenden Bauteil 200 verdrehen, ohne dass seine Beschädigung droht. Der Sprengring 225 wird von der Innenfläche des Einlaufs 330 des Sicherungsstücl<s erfasst und zunächst von einem wenig geneigten ersten Abschnitt 331 bezüglich der Längsachse der medienführenden Bauteile 100, 200 vorzentriert. Das Erfassen wird durch die Positionierung in der Aufnahmenut 221 aufgrund von nach innen umgebogenen Enden unterstützt (siehe unten, vgl. Figur 3). Es ergibt sich die unten in der Figur 2a gezeigte Situation.

Wenn nun das zweite medienführende Bauteil 200 weiter eingeschoben wird, wird der Sprengring 225 durch einen stärker geneigten zweiten Abschnitt 332 des Einlaufs 330 komprimiert, d. h. die beiden freien Enden (vgl. Figur 3) rücken aufeinander zu, wodurch der Durchmesser des Sprengrings 225 abnimmt. Zudem kommt der in der umlaufenden Nut 214 des zweiten medienführenden Bauteils 200 aufgenommene O-Ring 215 in Kontakt mit dem Innenmantel der zylindrischen Bohrung 101 und dichtet die medienführenden Bauteile 100, 200 gegeneinander in Bezug auf das zu führende Medium dichtend ab. Sobald der Sprengring 225 das Ende des Einlaufs 330 passiert hat, gelangt er in die Aufnahmenut 321 des Sicherungsstücl<s 300. Weil diese einen grösseren Aussendurchmesser aufweist als das distale Ende des Einlaufs 330 und den Sprengring 225 in axialer Richtung aufnehmen kann, entspannt sich dieser aufgrund seiner Elastizität sprunghaft, bis er am Grund der Aufnahmenut 321 des Sicherungsstücl<s 300 anliegt. Zu diesem Zeitpunkt liegt das zweite medienführende Bauteil 200 über eine der Aufnahmenut distal vorgelagerte Abschrägung 216 des Anschlussabschnitts 210 an einem entsprechend abgeschrägten Abschnitt des Endabschnitts 110 des ersten medienführenden Bauteils 100 und über einen entsprechend geformten Bereich des Anschlussabschnitts 210 am Einlauf 330 des Sicherungsstücl<s 300 an.

Die Verbindung ist aufgrund des Sprengrings 225 axial gesichert und aufgrund des O-Rings 215 abgedichtet.

Die Figur 3 zeigt einen Querschnitt durch die Verbindungseinrichtung im verbundenen Zustand, in einer Ebene A-A (vgl. Figur 2a) senkrecht zur Längsachse der medienführenden Bauteile. Der Sprengring 225 ist in einer umlaufenden Aufnahme mit einem symmetrisch ovalen Querschnitt aufgenommen, die von den Aufnahmenuten 221, 321 im zweiten medienführenden Bauteil 200 bzw. im Sicherungsstück 300 gebildet wird (vgl. Fig. 2a). Der Sprengring ist kreisförmig und weist einen kreisrunden Querschnitt auf. Seine Enden 226a, 226b sind nach innen, zum Symmetriezentrum hin, umgebogen. Dies stellt sicher, dass der Sprengring 225 die Aufnahmenut 221 im zweiten medienführenden Bauteil 200 auch im expandierten Zustand nicht vollständig verlassen kann, der Sprengring 225 somit zuverlässig am zweiten medienführenden Bauteil 200 gehalten ist. Wie aus der Figur 3 ersichtlich, legt sich der Sprengring 225 ausser im Bereich seiner Enden 226a, 226b im verbundenen Zustand der Verbindungseinrichtung am Boden der Aufnahmenut 321 des Sicherungsstücl<s 300 an. Aufgrund dessen und aufgrund der Dimensionierung der Aufnahmenuten 221, 321 ist sichergestellt, dass das zweite medienführende Bauteil 200 axial sicher am Sicherungsstück 300 fixiert ist (vgl. auch Fig. 2b).

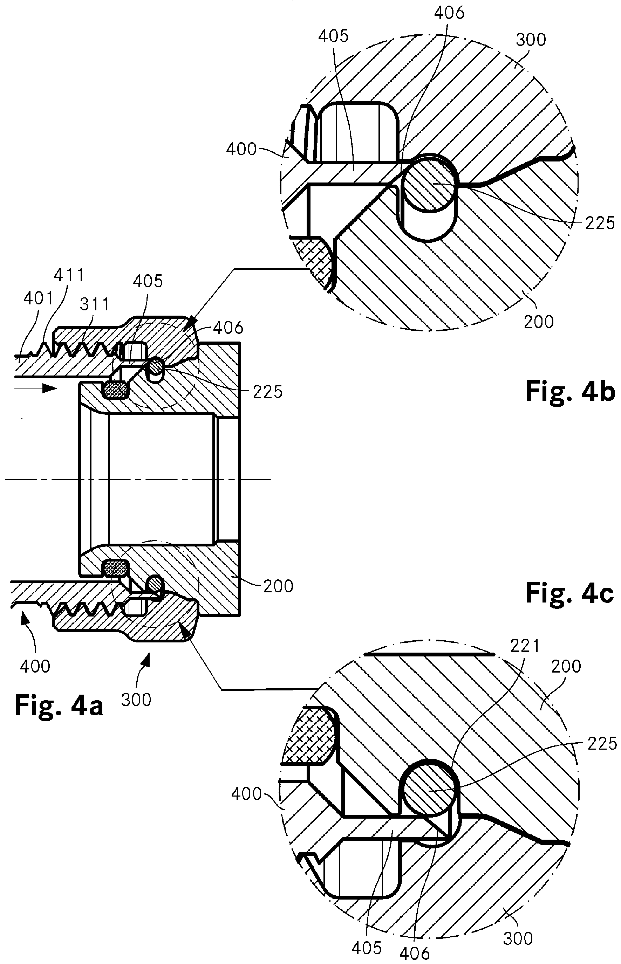

Die Figur 4a zeigt einen Längsschnitt durch das zweite medienführende Bauteil und das Sicherungsstück zu Beginn des Lösevorgangs (oben) und nach dem Komprimieren des Sprengrings (unten). Die Figuren 4b und 4c sind Detailausschnitte aus der Figur 4a. Der Lösevorgang dient dazu, nach dem Öffnen der Verbindungseinrichtung durch Lösen der Schraubverbindung des Sicherungsstücl<s 300 mit dem ersten medienführenden Bauteil das Sicherungsstück 300 vom zweiten medienführenden Bauteil 200 zu entfernen. Dazu wird ein Lösewerkzeug 400 verwendet. Dieses weist einen hohlzylindrischen Grundkörper 401 auf, in dessen Endbereich ein Aussengewinde 411 ausgebildet ist, das mit dem Innengewinde 311 des Sicherungsstücl<s 300 zusammenwirken kann. Stirnseitig weist das Lösewerkzeug 400 einen umlaufenden axialen Steg 405 auf, der wiederum stirnseitig eine sich zum freien Ende radial nach aussen hin konisch verjüngende Stirn 406 aufweist. Wie in der Figur 4b gut sichtbar ist, sind der Steg 405 und seine Stirn 406 so am Lösewerkzeug 400 positioniert, dass beim Einschrauben desselben die Stirn 406 den Sprengring 225 im Bereich seiner radial äusseren Hälfte erfasst (vgl. Figur 4b), aufgrund der (weitgehend) rotationssymmetrischen Ausgestaltung sowohl des Lösewerkzeugs 400 als auch des Sprengrings 225 entlang seines gesamten Umfangs. Durch ein weiteres Einschrauben des Lösewerkzeugs 400 wird der Sprengring 225 aufgrund der sich konisch erweiternden Stirn 406 radial nach innen gedrückt und somit komprimiert. Schliesslich ist der Sprengring 225 ganz in der Aufnahmenut 221 des zweiten medienführenden Bauteils 200 aufgenommen und weist in axialer Richtung keine Überschneidung mit dem Sicherungsstück 300 mehr auf (vgl. Figur 4c). Das zweite medienführende Bauteil 200 lässt sich nun ohne weiteres axial aus dem Sicherungsstück 300 herausziehen. Der Sprengring 225 verbleibt am zweiten medienführenden Bauteil 200. Dieses ist somit unmittelbar wieder bereit für eine weitere Steckverbindung.

Die Erfindung ist nicht auf das dargestellte Ausführungsbeispiel beschränkt. So kann insbesondere die Formgebung der verschiedenen Elemente anders gewählt sein. Auch die Abdichtung zwischen den medienführenden Bauteilen kann anders gelöst werden.

Zusammenfassend ist festzustellen, dass die Erfindung eine Verbindungsvorrichtung schafft, welche einfach und sicher herstellbar und wieder zerstörungsfrei lösbar ist.

## Patentansprüche

1. Anschlussvorrichtung zur Verbindung mit einem ersten medienführenden Bauteil (100) mit Aussengewinde (111), umfassend
ein zweites medienführendes Bauteil (200) mit einem endseitigen Anschlussabschnitt (210), wobei der Anschlussabschnitt (210) folgendes umfasst:
- einen Dichtabschnitt (211) mit einem zylindrischen Aussenmantel (212) und einem Dichtelement (215) zur dichtenden Verbindung mit dem Endabschnitt (110) des ersten medienführenden Bauteils (100);
- einen proximal zum Dichtabschnitt (211) angeordneten Sicherungsabschnitt (220), wobei am Sicherungsabschnitt (220) ein elastisches Element (225) angeordnet ist;
ein Sicherungsstück (300) mit einem Innengewinde (311) zum Aufschrauben auf das Aussengewinde (111) des ersten medienführenden Bauteils (100),
wobei das Sicherungsstück (300) und das zweite medienführende Bauteil (200) derart ausgebildet sind, dass das zweite medienführende Bauteil (200) durch einen Steckvorgang dichtend mit dem ersten medienführenden Bauteil (100) mit aufgeschraubtem Sicherungsstück (300) verbindbar ist, wobei die Verbindung durch das elastische Element (225) gesichert ist;
der Sicherungsabschnitt (220) des zweiten medienführenden Bauteils (200) eine Aufnahmenut (221) umfasst und als elastisches Element einen in der Aufnahmenut angeordneten Sprengring (225);
das Sicherungsstück (300) einen zulaufenden Einlauf (330) für den Sicherungsabschnitt (220) des zweiten medienführenden Bauteils (200) und eine Aufnahmenut (321) für den Sprengring (225) des zweiten medienführenden Bauteils (200) in seiner eingeschobenen Stellung aufweist; und
der zulaufende Einlauf (330) des Sicherungsstücl<s (300) in einem ersten, von der Aufnahmenut (321) abgewandten Abschnitt einen ersten Verjüngungswert aufweist und in einem zweiten, der Aufnahmenut (321) zugewandten Abschnitt einen zweiten Verjüngungswert aufweist, **dadurch gekennzeichnet, dass**
der zweite Verjüngungswert grösser ist als der erste Verjüngungswert.

2. Verbindungseinrichtung nach Anspruch 1, **dadurch gekennzeichnet, dass** die Aufnahmenut (321) des Sicherungsstücl<s (300) unmittelbar an den zulaufenden Einlauf (330) anschliesst.

3. Verbindungseinrichtung nach Anspruch 1 oder 2, **dadurch gekennzeichnet, dass** im verbundenen Zustand der Verbindung die Aufnahmenut (221) des zweiten medienführenden Bauteils (200) und die Aufnahmenut (321) des Sicherungsstücl<s (300) gemeinsam eine umlaufende Aufnahme mit einem symmetrisch ovalen Querschnitt bilden.

4. Verbindungseinrichtung nach einem der Ansprüche 1 bis 3, **dadurch gekennzeichnet, dass** freie Enden des Sprengrings (225) radial nach innen umgebogen sind.

5. Verbindungseinrichtung nach einem der Ansprüche 1 bis 4, **dadurch gekennzeichnet, dass** der Dichtabschnitt (211) des zweiten medienführenden Bauteils (200) eine umlaufende Nut (214) aufweist und dass das Dichtelement (215) durch ein in der Nut (214) eingelegtes umlaufendes Dichtungselement (215), insbesondere durch einen O-Ring, gebildet ist.

6. Verbindungseinrichtung für medienführende Bauteile, umfassend
ein erstes medienführendes Bauteil (100) mit einem Endabschnitt (110) mit einem Aussengewinde (111) und einem zylindrischen Innenmantel; und
eine Anschlussvorrichtung nach einem der Ansprüche 1 bis 5.

## Claims

1. Connection device for connection to a first media-carrying component (100) with an external thread (111), comprising
a second media-carrying component (200) with an end connection section (210), wherein the connection section (210) comprises the following:
- a sealing section (211) with a cylindrical outer shell (212) and a sealing element (215) for sealing connection with the end section (110) of the first media-conducting component (100);
- a securing section (220) arranged proximally to the sealing section (211), wherein an elastic element (225) is arranged on the securing section (220);
a securing piece (300) with an internal thread (311) for screwing onto the external thread (111) of the first media-carrying component (100),
wherein the securing piece (300) and the second media-carrying component (200) are designed in such a way that the second media-carrying component (200) can be connected in a sealing manner to the first media-carrying component (100) with the securing piece (300) screwed on by means of a plug-in process, wherein the connection is secured by the elastic element (225);
the securing section (220) of the second media-conducting component (200) comprises a receiving groove (221) and, as an elastic element, a snap ring (225) arranged in the receiving groove;
the securing piece (300) has a tapered inlet (330) for the securing section (220) of the second media-carrying component (200) and a receiving groove (321) for the snap ring (225) of the second media-carrying component (200) in its inserted position; and
the tapered inlet (330) of the securing piece (300) has a first taper value in a first section facing away from the receiving groove (321) and has a second taper value in a second section facing the receiving groove (321), **characterised in that** the second taper value is greater than the first taper value.

2. Connecting device according to claim 1, **characterised in that** the receiving groove (321) of the securing piece (300) directly adjoins the incoming inlet (330).

3. Connecting device according to claim 1 or 2, **characterised in that**, in the connected state of the connection, the receiving groove (221) of the second media-conducting component (200) and the receiving groove (321) of the securing piece (300) together form a circumferential receptacle with a symmetrically oval cross-section.

4. Connecting device according to one of claims 1 to 3, **characterised in that** free ends of the snap ring (225) are bent radially inwards.

5. Connecting device according to one of claims 1 to 4, **characterised in that** the sealing section (211) of the second media-carrying component (200) has a circumferential groove (214) and **in that** the sealing element (215) is formed by a circumferential sealing element (215), in particular by an O-ring, inserted in the groove (214).

6. Connecting device for media-carrying components, comprising
a first media-conveying component (100) having an end portion (110) with an external thread (111) and a cylindrical inner shell; and
a connection device according to any one of claims 1 to 5.

## Revendications

1. Dispositif de raccordement pour la liaison avec un premier composant transportant un milieu (100) avec un filetage extérieur (111), comprenant,
un deuxième composant transportant un milieu (200) avec une section de raccordement en extrémité (210), sachant que la section de raccordement (210) comprend les éléments suivants :
- une section d'étanchéité (211) avec une enveloppe extérieure cylindrique (212) et un élément d'étanchéité (215) pour la liaison étanche avec l'embout (110) du premier composant transportant un milieu (100),
- une section de fixation (220) disposée de façon proximale par rapport à la section d'étanchéité (211), sachant qu'un élément élastique (225) est disposé sur la section de fixation (220),
une pièce de fixation (300) avec un filetage intérieur (311) pour le vissage sur le filetage extérieur (111) du premier composant transportant un milieu (100),
sachant que la pièce de fixation (300) et le deuxième composant transportant un milieu (200) sont constitués de telle manière que le deuxième composant transportant un milieu (200) peut être raccordé de façon hermétique par une opération d'emboîtement au premier composant transportant un milieu (100) avec la pièce de fixation vissée (300), sachant que la liaison est assurée par l'élément élastique (225),
la section de fixation (220) du deuxième composant transportant un milieu (200) comprend une rainure de logement (221) et en tant qu'élément élastique un jonc d'arrêt (225) disposé dans la rainure de logement,
la pièce de fixation (300) comporte une prise d'introduction dégressive (330) pour la section de fixation (220) du deuxième composant transportant un milieu (200) et une rainure de logement (321) pour le jonc d'arrêt (225) du deuxième composant transportant un milieu (200) dans sa position introduite, et
la prise d'introduction dégressive (330) de la pièce de fixation (300) comporte une première valeur de réduction dans une première section éloignée de la rainure de logement (321) et comporte une deuxième valeur de réduction dans une deuxième section tournée vers la rainure de logement (321),
**caractérisé en ce que**
la deuxième valeur de réduction est plus grande que la première valeur de réduction.

2. Dispositif de liaison selon la revendication 1, **caractérisé en ce que** la rainure de logement (321) de la pièce de fixation (300) se raccorde directement à la prise d'introduction en terminaison (330).

3. Dispositif de liaison selon la revendication 1 ou 2, **caractérisé en ce qu'**à l'état relié de la liaison, la rainure de logement (221) du deuxième composant transportant un milieu (200) et la rainure de logement (321) de la pièce de fixation (300) forment ensemble un logement circulaire avec une section symétriquement ovale.

4. Dispositif de liaison selon l'une quelconque des revendications 1 à 3, **caractérisé en ce que** les extrémités libres du jonc d'arrêt (225) sont entourées radialement vers l'intérieur.

5. Dispositif de liaison selon l'une quelconque des revendications 1 à 4, **caractérisé en ce que** la section d'étanchéité (211) du deuxième composant transportant un milieu (200) comporte une rainure circulaire (214) et **en ce que** l'élément d'étanchéité (215) est formé par un élément d'étanchéité (215) entourant introduit dans la rainure (214), en particulier par un joint torique.

6. Dispositif de liaison pour composants transportant un milieu, comprenant
un premier composant transportant un milieu (100) avec un embout (110) avec un filetage extérieur (111) et une enveloppe intérieure cylindrique et
un dispositif de raccordement selon l'une quelconque des revendications 1 à 5.
